# FASCICULE DE BREVET EUROPEEN

(11) **EP 1 222 860 B1**
(45) Date de publication et mention de la délivrance du brevet: **25.04.2007**
(21) Numéro de dépôt: 02290033.6
(22) Date de dépôt: 08.01.2002
(51) Int. Cl.: A23G 3/50, A23G 3/54, A23G 3/00

(54) **Bonbon a texture rugueuse destiné au traîtement de l'halitose**
Konfekt mit Rauhstruktur zur Behandlung von Halitose
Confectionery with coarse structure for the treatment of halitosis

(30) Priorité: 12.01.2001 FR 0100437
(43) Date de publication de la demande: 17.07.2002
(73) Titulaire: Roquette Frères, 62136 Lestrem (FR)
(72) Inventeur: Saniez, Marie-Hélène, 59350 Saint-André Lez Lille (FR); Ribadeau-Dumas, Guillaume, 59237 Verlinghem (FR); Taillez, Céline, 59239 Thumeries (FR)
(74) Mandataire: Nargolwalla, Cyra

(56) Documents cités:
- EP-A- 0 481 940
- WO-A-91/07100
- DE-A- 2 426 916
- US-A- 4 112 066
- US-A- 4 263 328
- US-A- 4 692 339
- US-A- 5 637 344
- US-A- 6 030 605
- US-A- 6 083 527
- DATABASE WPI Section Ch, Week 199740 Derwent Publications Ltd., London, GB; Class D13, AN 1997-425847 XP002178376 & CN 1 114 862 A (SHU H), 17 janvier 1996 (1996-01-17)
- PATENT ABSTRACTS OF JAPAN vol. 1996, no. 03, 29 mars 1996 (1996-03-29) & JP 07 309734 A (TAKASHI SATO), 28 novembre 1995 (1995-11-28)
- ANONYMOUS: "Candy stays dandy." FOOD REVIEW 27 (10) 23 2000, vol. 27, no. 10, 2000, page 23 XP001028679

## Description

L'invention a pour objet un bonbon de type « sucre cuit » à texture rugueuse, utilisable pour traiter les problèmes d'halitose en réduisant la charge bactérienne linguale.

L'expression « sucre cuit » désigne, dans le domaine de la confiserie, les bonbons durs qui sont bien connus du consommateur et qui se présentent avec une consistance cassante et un aspect vitreux.

La fétidité de l'haleine, encore appelée halitose trouve le plus fréquemment ses causes dans la cavité buccale. Le sulfure d'hydrogène et le méthyle mercaptan sont les principaux composants malodorants qui naissent de la dégradation bactérienne des substrats protéiques contenant des groupements thiol et des disulfures qui sont des dérivés primaires des éléments cellulaires dans la salive. La teneur en composés volatils soufrés dans l'haleine est particulièrement élevée en cas d'état inflammatoire ou après de longues périodes de réduction du flux salivaire pendant le sommeil et après cessation des procédés de nettoyage buccal. Cette teneur en composés volatils soufrés dans l'haleine peut être notablement réduite dans la plupart des cas au moyen d'un brossage minutieux de la cavité buccale, y compris la surface dorso-postérieure de la langue ou par rinçage avec un bain de bouche contenant des sels de zinc. La langue est très souvent la cause de l'halitose. Elle comporte en effet de nombreuses villosités qui retiennent les bactéries responsables de la mauvaise haleine, et forment un dépôt lingual.

Les rince-bouche ne sont pas toujours efficaces car ils ne permettent pas d'atteindre toute la couche bactérienne à la surface de la langue et sont parfois astringents pour la cavité buccale.

Le traitement le plus efficace consiste à nettoyer la langue à l'aide d'un gratte-langue et à utiliser une solution buccale. Le gratte-langue permet d'éliminer le dépôt lingual et de réduire ainsi de moitié l'émanation de mauvaise odeur. L'inconvénient majeur de ce traitement pourtant très efficace reste le désagrément important causé par l'emploi de ce type de dispositif. Il est également proposé de nettoyer la langue à l'aide d'une brosse à dents mais cette technique est elle aussi très désagréable et un peu douloureuse.

On connaît parallèlement des confiseries à base de polyols destinées à l'hygiène buccale comme celles décrites dans le brevet US 6.083.527, dont l'action anti-halitose est basée sur l'augmentation du pH de la salive due à la présence d'hydroxyde de calcium.

WO9107100 et EP0481940 décrivent des bonbons durs contenant du xylitol. US4112066 décrit un bonbon pour rafraîchir la bouche comprenant de l'hydroxyde de calcium et de l'hydroxyde de Magnésium. JP07309734 des confiseries capables de prévenir l'halitose. US4263328 décrit un procédé pour obtenir des comprimés comprenant des bonbons gazéifiés.

Afin d'éviter les désagréments du râpage de la langue et dans le but d'inhiber la croissance voire d'éliminer les germes impliqués dans l'halitose, la Demanderesse a mis au point un nouveau bonbon de « sucre cuit », à texture rugueuse, qui râpe la langue sans la blesser de manière à décaper le film bactérien responsable de l'halitose.

L'expression « sucre cuit » désigne, dans le domaine de la confiserie, les bonbons durs, vitreux et cassants, bien connus du consommateur. Les bonbons « sucre cuit » conformes à l'invention ont la particularité de présenter une texture rugueuse, c'est à dire plus exactement granuleuse, et ce dans toute la masse du bonbon.

L'invention a donc pour objet un bonbon de type sucre cuit, caractérisé en ce qu'il présente une texture rugueuse, destinée au traitement de l'halitose.

L'invention a également pour objet un procédé de préparation d'un nouveau bonbon de type sucre cuit présentant ladite texture rugueuse.

Pour parvenir à une telle texture, inhabituelle dans ce genre de confiserie, la Demanderesse a trouvé après de longues recherches, qu'il convenait d'ajouter à la masse cuite de sucre cuit un ingrédient particulier, qui réponde aux deux critères suivants :
- un point de fusion supérieur à 110°C
- une granulométrie moyenne supérieure ou égale à 200 microns et de préférence supérieure ou égale à 400 microns.

Le bonbon conforme à l'invention est donc caractérisé en ce qu'il comprend un ingrédient cristallin susceptible de lui conférer une texture rugueuse destinée au traitement de l'halitose.

On entend donc par ingrédient cristallin susceptible de conférer au sucre cuit une texture rugueuse destinée au traitement de l'halitose tout saccharide en poudre, hydrogéné ou non, répondant à ces critères.

On pourra ainsi utiliser, sans que cette liste ne soit exhaustive, le mannitol, le maltitol, l'érythritol, l'isomalt, le lactitol anhydre, le saccharose, le dextrose anhydre, le lactose, le tréhalose anhydre, le mannose, le galactose, le xylose, les cyclodextrines.

On entend également par ingrédient cristallin susceptible de conférer au sucre cuit une texture rugueuse destinée au traitement de l'halitose tout acide organique ou sel d'acide organique répondant aux deux critères de point de fusion et de granulométrie exposés précédemment.

Pour préparer des bonbons conformes à la présente invention, on met en oeuvre un procédé caractérisé en ce qu'il comporte les étapes suivantes :
- cuisson sous pression atmosphérique d'un carbohydrate ou d'un mélange de carbohydrates à une température suffisante pour permettre la vitrification de la masse cuite lors de son refroidissement.
- ajout à la masse cuite d'un ingrédient cristallin propre à conférer au sucre cuit une texture rugueuse destinée au traitement de l'halitose.

En ce qui concerne l'étape de cuisson sous pression atmosphérique, celle-ci peut éventuellement être suivie d'un passage sous vide.

Le carbohydrate ou le mélange de carbohydrates utilisable dans le procédé selon l'invention peut être choisi parmi tous les carbohydrates connus de l'homme du métier convenant à la préparation de sucres cuits de bonne qualité.

Avantageusement, on choisira ce carbohydrate ou ce mélange de carbohydrates parmi un grand nombre de possibilités telles que notamment les mélanges de saccharose - sirop de glucose, saccharose - sirop de glucose et eau, les sirops de maltitol, les sirops de sorbitol, les sirops de glucose hydrogénés, les sirops de glucose hydrogénés et mannitol ou isomalt, les sirops de maltitol et mannitol ou isomalt, les sirops de maltitol en mélange avec mannitol et eau, les mélanges isomalt et eau, les mélanges isomalt, polydextrose et eau, dextrines hydrogénées ou non.

Le carbohydrate ou les mélanges de carbohydrates peuvent contenir en particulier des oligosaccharides ou des polysaccharides, des dextrines ou des polyglucoses comme les polydextroses, tels que ceux décrits dans la demande de brevet EP 561.090 dont la demanderesse est titulaire. Les sucres cuits seront ainsi avantageusement moins caloriques. Ces carbohydrates peuvent naturellement être combinés entre eux.

Le carbohydrate ou mélange de carbohydrates utilisable selon le procédé conforme à l'invention peut également être hydrogéné. Il sera alors choisi notamment parmi les sirops hydrogénés décrits dans les demandes de brevet EP 0.561.089, EP 0.561.088 et EP 0.611.527, dont la Demanderesse est titulaire. Il pourra être adjoint d'isomalt pur ou en mélange.

Selon une variante du procédé conforme à l'invention, le mélange de carbohydrates est un sirop de maltitol commercialisé par la Demanderesse sous l'appellation LYCASIN^{®}HBC ou de l'isomalt.

Selon une variante préférée du procédé conforme à l'invention, l'ingrédient susceptible de conférer une texture rugueuse au sucre cuit est incorporé à la masse cuite de sucre cuit à une teneur de 20% environ en poids sec.

Selon une autre variante préférée du procédé conforme à l'invention, ledit ingrédient est un polyol cristallin.

Le bonbon de sucre cuit selon la présente invention présente ainsi le double avantage de contribuer au traitement de l'halitose et de n'être pas cariogène.

L'invention sera mieux comprise à l'aide des exemples suivants qui se veulent illustratifs et non limitatifs.

### Exemple 1

Des sucres cuits ont été préparés selon la recette suivante :

| INGREDIENT | SUCRES CUITS A | SUCRES CUITS B | Composition sur sec (%) A B |
|---|---|---|---|
| LYCASIN^{®}HBC | 842,4 g | 842,7 g | 79,6 |
| Mannitol 400 DC | 153,7 g | 0 | 19,9 |
| Maltitol poudre | 0 | 153,7 g | 19,9 |
| Aspartame | 2,7 g | 2,7 g | 0,3 |
| Menthol | 1,2 g | 1,2 g | 0,2 |

Le mannitol 400 DC est un mannitol en poudre d'une granulométrie moyenne d'environ 400 microns.

Le maltitol poudre a une granulométrie comprise entre 400 et 800 microns.

Le LYCASIN^{®}HBC est cuit à 135°C.

On ajoute ensuite le mélange de mannitol 400 DC ou de maltitol, d'aspartame et de menthol.

Le mélange est tempéré, formé.

Les bonbons obtenus présentent un aspect rugueux et râpent la surface de la langue sans la blesser pendant toute la durée de leur dégustation.

### Exemple 2

Une heure après la fin du repas, une empreinte du dorsum de la langue est effectuée afin d'évaluer les bactéries présentes en surface. Immédiatement après, un bonbon selon l'invention a été consommé comme un sucre cuit normal c'est à dire pratiquement jusqu'à la fonte totale de celui-ci, puis une deuxième empreinte du dorsum de la langue a été effectuée.

Le milieu d'incubation des empreintes est constitué de Brain Heart Infusion.

Les milieux sont incubés en anaérobiose à 37°C pendant 2 jours.

On obtient les numérations suivantes :

| | Nombre de colonies par cm2 Après le repas | Nombre de colonies par cm2 Après ingestion du bonbon |
|---|---|---|
| ESSAI 1 | 41 | 9 |
| ESSAI 2 | 65 | 22 |

Ces résultats démontrent clairement l'effet de réduction de la population bactérienne à la surface de la langue, et donc le traitement de l'halitose, après consommation d'un bonbon selon l'invention.

## Revendications

1. Bonbon vitreux de type sucre cuit, le bonbon étant **caractérisé en ce qu'**il comprend un ingrédient cristallin choisi dans le groupe constitué par le mannitol, le maltitol, l'érythritol, l'isomalt, le lactitol anhydre, le saccharose, le dextrose anhydre, le lactose, le tréhalose anhydre, le mannose, le galactose, le xylose, les cyclodextrines, ledit ingrédient cristallin présentant une granulométrie supérieure à 200 microns, de préférence supérieure à 400 microns et un point de fusion supérieur à 110°C et ledit ingrédient cristallin conférant au sucre cuit une texture granuleuse.

2. Bonbon de type sucre cuit selon la revendication 1 pour le traitement de l'halitose.

3. Procédé de préparation d'un bonbon vitreux de type sucre cuit présentant une texture granuleuse **caractérisé en ce qu'**il comprend les étapes suivantes :
- cuisson sous pression atmosphérique d'un carbohydrate ou d'un mélange de carbohydrates choisi dans le groupe constitué par les mélanges saccharose et sirop de glucose, saccharose, sirop de glucose et eau, sirops de maltitol, sirops de sorbitol, sirops de glucose hydrogénés, sirops de glucose hydrogénés et mannitol ou isomalt, sirops de maltitol et mannitol ou isomalt, isomalt et eau, isomalt, polydextrose et eau, dextrines hydrogénées ou non, à une température suffisante pour permettre la vitrification de la masse cuite lors du refroidissement,
- ajout à la masse cuite d'un ingrédient cristallin choisi dans le groupe constitué par le mannitol, le maltitol, l'érythritol, l'isomalt, le lactitol anhydre, le saccharose, le dextrose anhydre, le lactose, le tréhalose anhydre, le mannose, le galactose, le xylose, les cyclodextrines, ledit ingrédient cristallin présentant une granulométrie supérieure à 200 microns, de préférence supérieure à 400 microns et un point de fusion supérieur à 110°C et ledit ingrédient étant susceptible de conférer au bonbon une texture granuleuse.

4. Procédé selon la revendication 3, **caractérisé en ce que** ledit mélange de carbohydrates est un sirop de maltitol ou l'isomalt.

5. Procédé selon l'une ou l'autre des revendications 3 et 4 **caractérisé en ce que** ledit ingrédient cristallin est choisi dans le groupe constitué par le mannitol, le maltitol, l'érythritol, l'isomalt, et le lactitol anhydre.

6. Utilisation d'un ingrédient cristallin choisi dans le groupe constitué par le mannitol, le maltitol, l'érythritol, l'isomalt, le lactitol anhydre, le saccharose, le dextrose anhydre, le lactose, le tréhalose anhydre, le mannose, le galactose, le xylose, les cyclodextrines, pour la fabrication d'un bonbon vitreux du type sucre cuit destiné au traitement de l'halitose, ledit ingrédient cristallin présentant une granulométrie supérieure à 200 microns, de préférence supérieure à 400 microns et un point de fusion supérieur à 110°C et ledit ingrédient cristallin conférant au sucre cuit une texture granuleuse.

## Claims

1. Vitreous sweet of boiled sugar type, the sweet being **characterized in that** it comprises a crystalline ingredient selected from the group consisting of mannitol, maltitol, erythritol, isomalt, anhydrous lactitol, sucrose, anhydrous dextrose, lactose, anhydrous trehalose, mannose, galactose, xylose and cyclodextrins, said crystalline ingredient exhibiting a particle size of greater than 200 microns and preferably of greater than 400 microns and a melting point of greater than 110°C and said crystalline ingredient providing the sweet with a granular texture.

2. Sweet of boiled sugar type according to claim 1, for the treatment of halitosis.

3. Process for the preparation of a vitreous sweet of boiled sugar type exhibiting a granular texture, **characterized in that** it comprises the following steps:
- cooking at atmospheric pressure a carbohydrate or a mixture of carbohydrates selected from the group consisting of sucrose and glucose syrup mixtures, sucrose, glucose syrup and water, maltitol syrups, sorbitol syrups, hydrogenated glucose syrups, mannitol or isomalt and hydrogenated glucose syrups, mannitol or isomalt and maltitol syrups, isomalt and water, isomalt, polydextrose and water, and hydrogenated or nonhydrogenated dextrins, , at a temperature sufficient to allow vitrification of the massecuite when it is cooled;
- addition to the massecuite of a crystalline ingredient selected from the group consisting of mannitol, maltitol, erythritol, isomalt, anhydrous lactitol, sucrose, anhydrous dextrose, lactose, anhydrous trehalose, mannose, galactose, xylose and cyclodextrins, said crystalline ingredient exhibiting a particle size of greater than 200 microns and preferably of greater than 400 microns and a melting point of greater than 110°C and said crystalline ingredient being able to provide the sweet with a granular texture.

4. Process according to claim 3, **characterized in that** said mixture of carbohydrates is a maltitol syrup or isomalt.

5. Process according to any one of claims 3 and 4, **characterized in that** said crystalline ingredient is selected form the group consisting of mannitol, maltitol, erythritol, isomalt and anhydrous lactitol.

6. Use of a crystalline ingredient selected from the group consisting of mannitol, maltitol, erythritol, isomalt, anhydrous lactitol, sucrose, anhydrous dextrose, lactose, anhydrous trehalose, mannose, galactose, xylose and cyclodextrins, for the manufacture of a vitreous sweet of boiled sugar type for the treatment of halitosis, said crystalline ingredient exhibiting a particle size of greater than 200 microns and preferably of greater than 400 microns and a melting point of greater than 110°C and said crystalline ingredient providing the sweet with a granular texture.

## Patentansprüche

1. Glasartiges Bonbon vom Typ gekochter Zucker, **dadurch gekennzeichnet, dass** es einen kristallinen Bestandteil enthält, der aus der Gruppe bestehend aus Mannit, Maltit, Erythrit, Isomalt, wasserfreiem Lactit, Saccharose, wasserfreier Dextrose, Lactose, wasserfreier Trehalose, Mannose, Galactose, Xylose und Cyclodextrinen ausgewählt ist, eine Teilchengröße von mehr als 200 Mikron und vorzugsweise über 400 Mikron und einem Schmelzpunkt von mehr als 110°C aufweist und dem gekochten Zucker eine körnige Textur verleiht.

2. Bonbon vom Typ gekochter Zucker nach Anspruch 1 zur Behandlung von Halitose.

3. Verfahren zur Herstellung eines glasartigen Bonbons vom Typ gekochter Zucker mit einer körnigen Textur, **dadurch gekennzeichnet, dass** man:
- ein Kohlenhydrat oder eine Mischung von Kohlenhydraten aus der Gruppe bestehend aus Mischungen von Saccharose und Glucosesirup, Saccharose, Glucosesirup und Wasser, Maltitsirupen, Sorbitsirupen, hydrierten Glucosesirupen, hydrierten Glucosesirupen und Mannit oder Isomalt, Maltitsirupen und Mannit oder Isomalt, Isomalt und Wasser, Isomalt, Polydextrose und Wasser und hydrierten oder unhydrierten Dextrinen unter Normaldruck bei einer zum Glasigwerden der gekochten Masse beim Abkühlen ausreichenden Temperatur kocht,
- der gekochten Masse einen kristallinen Bestandteil zusetzt, der aus der Gruppe bestehend aus Mannit, Maltit, Erythrit, Isomalt, wasserfreiem Lactit, Saccharose, wasserfreier Dextrose, Lactose, wasserfreier Trehalose, Mannose, Galactose, Xylose und Cyclodextrinen ausgewählt ist, eine Teilchengröße von mehr als 200 Mikron und vorzugsweise über 400 Mikron und einem Schmelzpunkt von mehr als 110°C aufweist und dazu befähigt ist, dem gekochten Zucker eine körnige Textur zu verleihen.

4. Verfahren nach Anspruch 3, **dadurch gekennzeichnet, dass** es sich bei der Kohlenhydratmischung um Maltitsirup oder Isomalt handelt.

5. Verfahren nach Anspruch 3 oder 4, **dadurch gekennzeichnet, dass** man den kristallinen Bestandteil aus der Gruppe bestehend aus Mannit, Maltit, Erythrit, Isomalt und wasserfreiem Lactit auswählt.

6. Verwendung eines kristallinen Bestandteils, der aus der Gruppe bestehend aus Mannit, Maltit, Erythrit, Isomalt, wasserfreiem Lactit, Saccharose, wasserfreier Dextrose, Lactose, wasserfreier Trehalose, Mannose, Galactose, Xylose und Cyclodextrinen ausgewählt ist, zur Herstellung eines glasartigen Bonbons vom Typ gekochter Zucker zur Behandlung von Halitose, wobei der kristalline Bestandteil eine Teilchengröße von mehr als 200 Mikron und vorzugsweise über 400 Mikron und einem Schmelzpunkt von mehr als 110°C aufweist und dem gekochten Zucker eine körnige Textur verleiht.
